# EUROPÄISCHE PATENTSCHRIFT

(11) **EP 2 427 355 B1**
(45) Veröffentlichungstag und Bekanntmachung des Hinweises auf die Patenterteilung: **29.05.2013**
(21) Anmeldenummer: 10709518.4
(22) Anmeldetag: 18.03.2010
(51) Int. Cl.: B60T 7/04, B60T 7/06, B60T 11/18, G05G 1/46

(54) **BREMSBETÄTIGUNGSEINHEIT ZUR BETÄTIGUNG EINER KRAFTFAHRZEUGBREMSANLAGE**
BRAKE ACTUATION UNIT FOR ACTUATING A MOTOR VEHICLE BRAKE SYSTEM
UNITÉ D'ACTIONNEMENT DE FREIN POUR L'ACTIONNEMENT D'UN SYSTÈME DE FREINAGE DE VÉHICULE AUTOMOBILE

(30) Priorität: 07.05.2009 DE 102009002886; 15.03.2010 DE 102010002850
(43) Veröffentlichungstag der Anmeldung: 14.03.2012
(73) Patentinhaber: Continental Teves AG & Co. oHG, 60488 Frankfurt (DE)
(72) Erfinder: SELLINGER, Thomas, 63073 Offenbach (DE); DROTT, Peter, 65936 Frankfurt (DE); KRÄMER, Horst, 65462 Ginsheim-Gustavsburg (DE)
(86) Internationale Anmeldenummer: PCT/EP2010/053511
(87) Internationale Veröffentlichungsnummer: WO 2010/127898

(56) Entgegenhaltungen:
- EP-A1- 1 559 933
- EP-B1- 0 229 350
- WO-A1-01/53135
- WO-A2-2009/016040
- FR-A1- 2 887 834
- FR-A1- 2 887 836
- US-A- 4 650 363

## Beschreibung

Die Erfindung betrifft eine Bremsbetätigungseinheit zur Betätigung einer Kraftfahrzeugbremsanlage vom Typ "Brake-by-wire", mit einem sowohl mittels eines Bremspedals als auch mittels einer elektronischen Steuereinheit fahrerwunschabhängig betätigbaren Bremskraftverstärker mit einer Kolbenstange, wobei Mittel zur Entkopplung einer kraftübertragenden Verbindung zwischen dem Bremspedal und dem Bremskraftverstärker in der Betriebsart "Brake-by-wire" vorgesehen sind,
einem dem Bremskraftverstärker nachgeschalteten Hauptbremszylinder, Mitteln zum Erfassen eines Fahrerverzögerungswunsches, sowie einem mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist, wobei zur Entkopplung zwischen dem Bremspedal bzw. einem dem Bremspedal zugeordneten Bauteil und der Kolbenstange als einem im Kraftfluss nachgeschalteten, dem Bremskraftverstärker zugeordneten Bauteil ein Abstand vorgesehen ist, um das Bremspedal in der Betriebsart "Brake-by-wire" von Rückwirkungskräften der Kraftfahrzeugbremsanlage zu entkoppeln.

Ein derartiges Bremssystem ist aus der DE 10 2007 044 423 A1 bekannt und findet verbreitet Anwendung in modernen Kraftfahrzeugen mit Hybridantrieb. Die Entkopplung zwischen dem Bremspedal und dem Bremskraftverstärker in der Betriebsart "Brake-by-wire" wird hierbei durch eine Lücke zwischen einem dem Bremspedal zugeordneten Bauteil und einem dem Bremskraftverstärker zugeordneten Bauteil realisiert. Hierzu weist die bekannte Bremsbetätigungseinheit eine Kolbenstange auf, deren Kolbenstangenkopf als ein das Bremspedal umgreifendes, U-förmiges Biegeteil ausgeführt ist. Der Kolbenstangenkopf weist zur Führung eines am Pedal befestigten Bolzens auf beiden Seiten zwei parallel zueinander verlaufende Schenkel auf, in denen Längsführungsöffnungen als durch Stanzen hergestellte Öffnungen ausgebildet sind. Zwischen dem Bolzen und einem Gabelkopfanschlag befindet sich ein axialer Spalt. Dieser stellt beim Rekuperieren, d.h. bei einer Bremsung mittels eines Generators, sicher, dass ein vorgegebener Abstand zum Bremskraftverstärker gehalten wird (Entkopplung). Bei einem Ausfall der Elektronik wird andererseits ein formschlüssiger Kontakt zum Bremskraftverstärker hergestellt.

Ferner ist aus WO 01/53135 A1 ein Bremskrafterzeuger mit einer verrastbaren Ankopplung an eine Betätigungseinrichtung bekannt, welcher zur Vereinfachung und Automatisierbarkeit der Ankopplung eine Rastvorrichtung mit einem mit dem Ende der Krafteingangsstange kraftschlüssig befestigten Gehäuse aufweist. In dem Gehäuse ist, eine Lagerpfanne für das Teil der Betätigungseinrichtung ausgebildet, das bei der Herstellung der Verbindung zwischen dem Bremskrafterzeuger und seiner Betätigungseinrichtung in das Gehäuse der Rastvorrichtung eingeführt wird. Zur Erleichterung des Einführvorganges ist das der Betätigungseinrichtung zugewandte Ende des Gehäuses als eine trichterförmige Erweiterung ausgestaltet. Axial zwischen der trichterförmigen Erweiterung und der Lagerpfanne ist im Gehäuse wenigstens ein radial bewegliches und federnd radial nach innen vorgespanntes Rastelement zum Zusammenwirken mit dem Teil der Betätigungseinrichtung angeordnet.

Als nachteilig werden das aufwendige Design sowie der montagetechnische Mehraufwand der Kolbenstange angesehen.

Es ist daher Aufgabe der vorliegenden Erfindung, eine dahin gehend verbesserte Bremsbetätigungseinheit vorzuschlagen.

Diese Aufgabe wird erfindungsgemäß durch die kennzeichnenden Merkmale des unabhängigen Patentanspruchs 1 gelöst. Dabei ist vorgesehen, dass zur Führung eines Endes der Kolbenstange ein Halteelement auf dem Bremspedal befestigt ist, welches eine trichterförmige, in Richtung der Kolbenstange ausgerichtete Aufnahme aufweist. Die Aufnahme dient zum einen der Führung des Endes der Kolbenstange während der Montage der Pedaleinheit mit dem Bremskraftverstärker. Zum anderen wird die Kolbenstange nach Verbindung mit dem Bremspedal durch die Aufnahme und/oder durch das Haltelement geführt.

Durch die Führung der Kolbenstange mittels der Aufnahme und/oder des Haltelementes ist der axiale Spalt bzw. der Abstand sichergestellt, der in der Betriebsart "Brake-by-wire" eine Entkopplung der kraftübertragenden Verbindung zwischen dem Bremspedal und dem Bremskraftverstärker gewährleistet. Ein weiterer Vorteil ist darin zu sehen, dass das Bremspedal im Bereich der Kolbenstangenverbindung nicht geschwächt wird.

Weitere Merkmale und Vorteile der Erfindung werden in der nachfolgenden Beschreibung unter Bezugnahme auf die beiliegenden Zeichnungen an einem Ausführungsbeispiel näher erläutert. In den Zeichnungen zeigen schematisch:
- Fig. 1: eine bekannte Bremsbetätigungseinheit der eingangs genannten Gattung;
- Fig. 2: eine Pedaleinheit einer erfindungsgemäßen Bremsbetätigungseinheit und
- Fig. 3: eine vergrößerte Ansicht der Pedaleinheit gemäß Fig. 2 teilweise geschnitten.

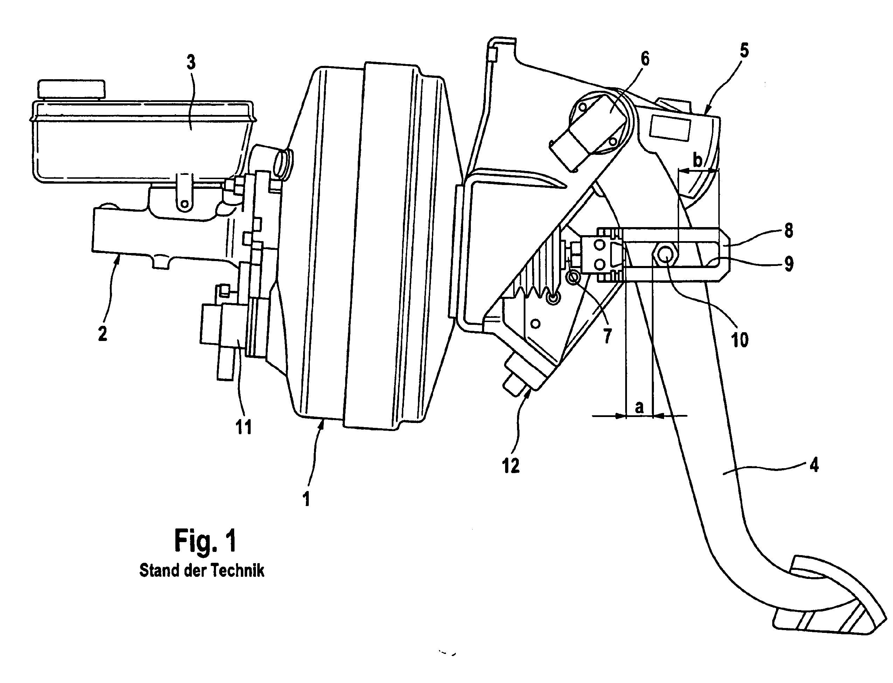

Die in Fig. 1 dargestellte bekannte Betätigungseinheit besteht aus einem Bremskraftverstärker 1, vorzugsweise einem Unterdruckbremskraftverstärker, einem dem Bremskraftverstärker 1 nachgeschalteten Hauptbremszylinder 2, vorzugsweise einem Tandemhauptzylinder, an dessen nicht dargestellte Druckräume unter Zwischenschaltung einer ebenfalls nicht dargestellten hydraulischen Steuer- und Regeleinheit Radbremsen des Kraftfahrzeuges angeschlossen sind, sowie einem dem Hauptbremszylinder 2 zugeordneten Druckmittelvorratsbehälter 3. Der Betätigung des Bremskraftverstärkers 1 durch den Fahrer dient ein Bremspedal 4, wobei ein mit dem Bremspedal 4 insbesondere in der Betriebsart "Brake-by-wire" zusammenwirkender, lediglich angedeuteter Pedalwegsimulator 5 vorgesehen ist, der dem Fahrer das gewöhnliche Bremspedalgefühl vermittelt. Ein Fahrerverzögerungswunsch bzw. der Betätigungsweg des Bremspedals 4 wird mittels mindestens einer Sensoreinrichtung 6 erfasst, deren Signale einer nicht gezeigten elektronischen Steuereinheit zugeführt werden. Durch die Ausgangssignale der elektronischen Steuereinheit ist u. a. ein dem Bremskraftverstärker 1 zugeordneter Elektromagnet ansteuerbar, der eine vom Fahrerwillen unabhängige Betätigung eines pneumatischen Steuerventils ermöglicht, das eine Luftzufuhr zum Bremskraftverstärker 1 steuert.

Ein mit dem Bremspedal 4 gekoppeltes Eingangsglied bzw. eine Kolbenstange 7, die der Betätigung des vorhin genannten Steuerventils durch den Fahrer dient, weist einen Kolbenstangenkopf 8 auf, in dem Längsführungsöffnungen 9 ausgebildet sind. Die Längsführungsöffnungen 9 nehmen ein mit dem Bremspedal 4 verbundenes Kraftübertragungsteil 10 auf, das als ein Bolzen ausgeführt ist. Dabei ist die Anordnung der genannten Teile 8, 10 derart getroffen, dass zwischen der in der Zeichnung linksseitigen Begrenzung der Längsführungsöffnungen 9 und dem Bolzen 10 ein axialer Spalt bzw. Abstand a vorgesehen ist, der in der Betriebsart "Brake-by-wire" eine Entkopplung der kraftübertragenden Verbindung zwischen dem Bremspedal 4 und dem Bremskraftverstärker 1 gewährleistet. Durch einen zwischen dem Bolzen 10 und der in der Zeichnung linksseitigen Begrenzung der Längsführungsöffnungen 9 vorgesehenen axialen Spalt bzw. Abstand b wird erreicht, dass bei einer vom Fahrerwillen unabhängigen Ansteuerung des Bremskraftverstärkers 1 das Bremspedal 4 nicht mit bewegt wird. Ein Wegsensor 11 dient der Erfassung des Weges einer die Verstärkungskraft des Bremskraftverstärkers 1 aufbringenden beweglichen Wand bzw. des Weges eines Ausgangsglieds des Bremskraftverstärkers 1, das seine Ausgangskraft auf einen nicht dargestellten ersten Kolben des Hauptbremszylinders 2 überträgt.

Der Pedalwegsimulator 5, durch den, wie bereits erwähnt, in der Betriebsart "Brake-by-wire" eine auf das Bremspedal 4 wirkende Rückstellkraft unabhängig von einer Betätigung des Bremskraftverstärkers 1 simulierbar ist, ist derart ausgeführt, dass er mittels einer lediglich schematisch angedeuteten Zu- und Abschalteinrichtung 12 in der Betriebsart "Brake-by-wire" bei der Entkopplung der kraftübertragenden Verbindung zwischen dem Bremspedal 4 und dem Bremskraftverstärker 1 zuschaltbar und außerhalb der Betriebsart "Brake-by-wire" abschaltbar ist.

Wie Fig. 1 weiter zu entnehmen ist, ist der Kolbenstangenkopf 8 als ein das Bremspedal 4 umgreifendes, U-förmiges Biegeteil ausgeführt ist.
Der Kolbenstangenkopf weist zur Führung eines am Pedal befestigten Bolzens auf beiden Seiten zwei parallel zueinander verlaufende Schenkel auf, in denen Längsführungsöffnungen 9 als durch Stanzen hergestellte Öffnungen ausgebildet sind.

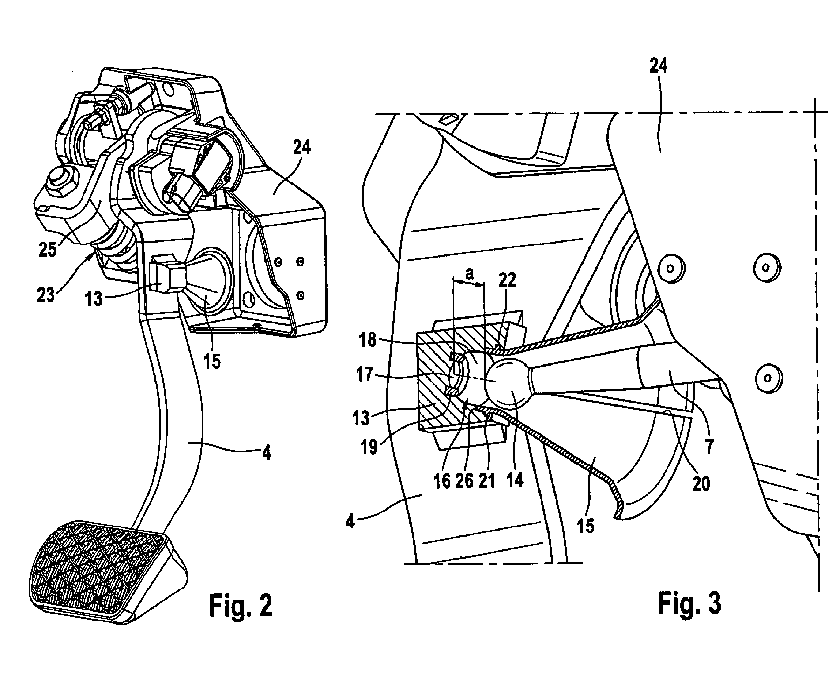

Um eine in Hinblick auf das Design sowie den montagetechnischen Aufwand der Kolbenstange verbesserte Bremsbetätigungseinheit bereitzustellen, weist die erfindungsgemäße Bremsbetätigungseinheit, deren Pedaleinheit in den Fig. 2 und 3 perspektivisch dargestellt ist, zur Führung eines Endes 14 der Kolbenstange 7 ein auf dem Bremspedal 4 befestigtes Halteelement 13 auf, welches eine trichterförmige, in Richtung der Kolbenstange 7 ausgerichtete Aufnahme 15 aufweist.

Die Aufnahme 15 dient zum einen der Führung des Endes 14 der Kolbenstange 7 - hier in Form eines Kolbenstangenkopfes - während der Montage der Pedaleinheit mit dem Bremskraftverstärker 1. Zum anderen wird die Kolbenstange 7 nach Verbindung mit dem Bremspedal 4 durch die Aufnahme 15 und/oder durch das Haltelement 13 geführt.

Durch die Führung der Kolbenstange 7 mittels der Aufnahme 15 und/oder des Haltelementes 13 ist der axiale Spalt bzw. der Abstand a sichergestellt, der in der Betriebsart "Brake-by-wire" eine Entkopplung der kraftübertragenden Verbindung zwischen dem Bremspedal 4 und dem Bremskraftverstärker 1 gewährleistet.

Ein weiterer Vorteil ist darin zu sehen, dass das Bremspedal 4 im Bereich der Kolbenstangenverbindung nicht wie bei bekannten Bremsbetätigungseinheiten gemäß Fig. 1 geschwächt wird.

Wie insbesondere aus Fig. 3 deutlich hervorgeht, welche eine vergrößerte und teilweise geschnittene Darstellung der Pedaleinheit zeigt, weist das Halteelement 13 eine Ausnehmung 16 auf, an deren Boden 17 das Ende 14 der Kolbenstange 7 außerhalb der Betriebsart "Brake-by-wire" zur Anlage kommt, wenn der Abstand a aufgebraucht wird, um eine Kopplung zwischen dem Bremspedal 4 und dem Bremskraftverstärker 1 zu ermöglichen.

Ferner ist aus Fig. 3 zu entnehmen, dass die trichterförmige Aufnahme 15 an einer Innenwand 18 der Ausnehmung 16 befestigt ist. Hierzu weist die trichterförmige Aufnahme 15 einen axialen Schlitz 20 und ein radialen Vorsprung 21 auf, welcher unter Federspannung in einer Innennut 22 der Innenwand 18 der Ausnehmung 16 gehalten wird. Wie Fig. 3 zu entnehmen ist, weist die Innenwand 18 zur verbesserten Positionierung der Aufnahme 16 ein Stufe 26 auf, an welcher die Aufnahme 16 nach der Befestigung anliegt.

Um Geräusche bei Kontakt des Endes 14 mit dem Boden 17 zu reduzieren, ist des Weiteren an dem Boden 17 der Ausnehmung 16 ein Dämpfungselement 19 vorgesehen, welches vorzugsweise in Form eines Dämpfungsringes ausgebildet ist.

Das Halteelement 13 kann beispielsweise durch Schweißen in einfacher Weise auf dem Bremspedal 4 befestigt werden.

Die Erfindung kann in einer gemäß Fig. 1 gezeigten und beschriebenen Bremsbetätigungseinheit mit Pedalwegsimulator 5 und Zu- und Abschalteinrichtung 12 Anwendung finden.

Im Unterschied zu Fig. 1 zeigen die Fig. 2 und 3 einen Pedalwegsimulator 23, dessen Kraft-Weg-Charakteristik steuerbar vorgesehen ist. Auch bei einer derartigen Ausgestaltung der Bremsbetätigungseinheit kann die Erfindung eingesetzt werden.

Durch die Steuerung der Pedalcharakteristik kann ein zusätzlicher Weg mit limitiertem Kraftniveau freigegeben werden, wenn das "Brake-by-wire"-System ausfällt oder eine höhere Bremsleistung erforderlich ist, so dass keine gesonderte Abschaltung des Pedalwegsimulators 23 in der Rückfallebene gemäß dem beschriebenen Stand der Technik außerhalb der Betriebsart "Brake-by-wire" mehr erfolgen muss. Somit ist besonders von Vorteil, dass keine Einrichtung zur Ab- oder Zuschaltung des Pedalwegsimulators mehr nötig ist, wodurch auch eine Überwachung derselben entfallen kann.

Die Steuerung der Kraft-Weg-Charakteristik, d.h. des Pedalwegs erfolgt beispielsweise kraftabhängig, so dass ab einer vorbestimmten auf das Bremspedal 4 aufgebrachten Fußkraft eine Verlängerung des Pedalwegs ermöglicht wird und die hierbei aufzubringende Reaktionskraft einen definierten Grenzwert nicht überschreitet.

Der Pedalwegsimulator 23 ist hierbei beispielsweise gemäß Fig. 2 zwischen einem fahrzeugfesten Bauteil der Pedaleinheit, dem sogenannten Pedalbock 24, und dem Bremspedal 4 oder einem sich koaxial zum Bremspedal 4 drehbaren Bauteil 25 in Form eines Hebels angeordnet.

### Bezugszeichenliste

| | |
|---|---|
| 1 | Bremskraftverstärker |
| 2 | Hauptbremszylinder |
| 3 | Druckmittelvorratsbehälter |
| 4 | Bremspedal |
| 5 | Pedalwegsimulator |
| 6 | Sensoreinrichtung |
| 7 | Kolbenstange |
| 8 | Kolbenstangenkopf |
| 9 | Längsführung |
| 10 | Kraftübertragungsteil |
| 11 | Wegsensor |
| 12 | Zu- und Abschalteinrichtung |
| 13 | Haltelement |
| 14 | Ende |
| 15 | Aufnahme |
| 16 | Ausnehmung |
| 17 | Boden |
| 18 | Innenwand |
| 19 | Dämpfungselement |
| 20 | Schlitz |
| 21 | Vorsprung |
| 22 | Innennut |
| 23 | Pedalwegsimulator |
| 24 | Pedalbock |
| 25 | Bauteil |
| 26 | Stufe |
| | |
| a | Abstand |

## Patentansprüche

1. Bremsbetätigungseinheit zur Betätigung einer Kraftfahrzeugbremsanlage vom Typ "Brake-by-wire", mit einem sowohl mittels eines Bremspedals (4) als auch mittels einer elektronischen Steuereinheit fahrerwunschabhängig betätigbaren Bremskraftverstärker (1) mit einer Kolbenstange (7), wobei Mittel zur Entkopplung einer kraftübertragenden Verbindung zwischen dem Bremspedal (4) und dem Bremskraftverstärker (1) in der Betriebsart "Brake-by-wire" vorgesehen sind,
einem dem Bremskraftverstärker (1) nachgeschalteten Hauptbremszylinder (2),
Mitteln zum Erfassen eines Fahrerverzögerungswunsches (6), sowie
einem mit dem Bremspedal (4) zusammenwirkenden Pedalwegsimulator (5;23), durch den in der Betriebsart "Brake-by-wire" eine auf das Bremspedal (4) wirkende Rückstellkraft unabhängig von einer Betätigung des Bremskraftverstärkers (1) simulierbar ist, wobei zur Entkopplung zwischen dem Bremspedal (4) bzw. einem dem Bremspedal (4) zugeordneten Bauteil und der Kolbenstange (7) als einem im Kraftfluss nachgeschalteten, dem Bremskraftverstärker (1) zugeordneten Bauteil ein Abstand (a) vorgesehen ist, um das Bremspedal (4) in der Betriebsart "Brake-by-wire" von Rückwirkungskräften der Kraftfahrzeugbremsanlage zu entkoppeln,
**dadurch gekennzeichnet, dass** zur Führung eines Endes (14) der Kolbenstange (7) ein Halteelement (13) auf dem Bremspedal (4) befestigt ist, welches eine trichterförmige, in Richtung der Kolbenstange (7) ausgerichtete Aufnahme (15) aufweist.

2. Bremsbetätigungseinheit nach Anspruch 1, **dadurch gekennzeichnet, dass** das Halteelement (13) eine Ausnehmung (16) aufweist, an deren Boden (17) das Ende (14) der Kolbenstange (7) außerhalb der Betriebsart "Brake-by-wire" zur Anlage kommt, und die trichterförmige Aufnahme (15) an einer Innenwand (18) der Ausnehmung (16) befestigt ist.

3. Bremsbetätigungseinheit nach Anspruch 2, **dadurch gekennzeichnet, dass** an dem Boden (17) der Ausnehmung (16) des Halteelementes (13) ein Dämpfungselement (19) vorgesehen ist.

4. Bremsbetätigungseinheit nach Anspruch 3, **dadurch gekennzeichnet, dass** das Dämpfungselement (19) in Form eines Dämpfungsringes vorgesehen ist.

5. Bremsbetätigungseinheit nach einem der vorangegangenen Ansprüche, **dadurch gekennzeichnet, dass** das Halteelement (13) durch Schweißen auf dem Bremspedal (4) befestigt ist.

6. Bremsbetätigungseinheit nach einem der vorangegangenen Ansprüche, **dadurch gekennzeichnet, dass** die trichterförmige Aufnahme (15) einen axialen Schlitz (20) und ein radialen Vorsprung (21) aufweist, wobei der Vorsprung (21) unter Federspannung in einer Innennut (22) der Innenwand der Ausnehmung gehalten wird.

## Claims

1. Brake actuation unit for actuating a motor vehicle brake system of the "Brake-by-wire" type, having a brake booster (1) which can be actuated both by means of a brake pedal (4) and by means of an electronic control unit as a function of a driver's request and has a piston rod (7), wherein means are provided for decoupling a force-transmitting connection between the brake pedal (4) and the brake booster (1) in the "Brake-by-wire" operating mode,
a master brake cylinder (2) arranged downstream of the brake booster (1),
means for registering a driver's deceleration request (6), and
a pedal travel simulator (5;23) which interacts with the brake pedal (4) and by means of which, in the "Brake-by-wire" operating mode, a restoring force acting on the brake pedal (4) can be simulated independently of actuation of the brake booster (1), wherein, in order to decouple a force-transmitting connection between the brake pedal (4) or a component assigned to the brake pedal (4) and the piston rod (7) as a component which is arranged downstream of the force flux and is assigned to the brake booster (1), a distance (a) is provided in order to decouple the brake pedal (4) in the "Brake-by-wire" operating mode from reaction forces of the motor vehicle brake system,
**characterized in that**, in order to guide an end (14) of the piston rod (7), a securing element (13), which has a funnel-shaped receptacle (15) oriented in the direction of the piston rod (7), is attached to the brake pedal (4).

2. Brake actuation unit according to Claim 1, **characterized in that** the securing element (13) has a recess (16), on whose base (17) the end (14) of the piston rod (7) comes to bear outside the "Brake-by-wire" operating mode, and the funnel-shaped receptacle (15) is attached to an inner wall (18) of the recess (16).

3. Brake actuation unit according to Claim 2, **characterized in that** a damping element (19) is provided on the base (17) of the recess (16) in the securing element (13).

4. Brake actuation unit according to Claim 3, **characterized in that** the damping element (19) is provided in the form of a damping ring.

5. Brake actuation unit according to one of the preceding claims, **characterized in that** the securing element (13) is attached to the brake pedal (4) by welding.

6. Brake actuation unit according to one of the preceding claims, **characterized in that** the funnel-shaped receptacle (15) has an axial slot (20) and a radial projection (21), wherein the projection (21) is held under spring stress in an inner groove (22) in the inner wall of the recess.

## Revendications

1. Unité d'actionnement de frein pour l'actionnement d'un système de freinage d'un véhicule automobile du type système de freinage électronique, comprenant
un servofrein (1) avec une tige de piston (7), pouvant être actionné à la fois au moyen d'une pédale de frein (4) et au moyen d'une unité de commande électronique en fonction du souhait du conducteur, des moyens étant prévus pour désaccoupler une liaison de transfert de force entre la pédale de frein (4) et le servofrein (1) dans le mode de fonctionnement de freinage électronique,
un cylindre de frein principal (2) monté en aval du servofrein (1),
des moyens pour détecter un souhait de ralentissement du conducteur (6) ainsi qu'un simulateur de course de pédale (5 ; 23) coopérant avec la pédale de frein (4), par le biais duquel, dans le mode de fonctionnement de freinage électronique, une force de rappel agissant sur la pédale de frein (4) peut être simulée indépendamment d'un actionnement du servofrein (1), une distance (a) étant prévue pour le désaccouplement entre la pédale de frein (4) ou un composant associé à la pédale de frein (4) et la tige de piston (7) en tant que composant associé au servofrein (1) et monté en aval dans le flux de forces, pour désaccoupler la pédale de frein (4) dans le mode de fonctionnement de freinage électronique des forces de rétroaction du système de freinage de véhicule automobile, **caractérisée en ce que** pour le guidage d'une extrémité (14) de la tige de piston (7), un élément de retenue (13) est fixé sur la pédale de frein (4), lequel présente un logement (15) en forme d'entonnoir, orienté dans la direction de la tige de piston (7).

2. Unité d'actionnement de frein selon la revendication 1, **caractérisée en ce que** l'élément de retenue (13) présente un évidement (16) au fond (17) duquel vient s'appuyer l'extrémité (14) de la tige de piston (7) en dehors du mode de fonctionnement de freinage électronique, et le logement (15) en forme d'entonnoir est fixé sur une paroi intérieure (18) de l'évidement (16).

3. Unité d'actionnement de frein selon la revendication 2, **caractérisée en ce qu**'un élément d'amortissement (19) est prévu sur le fond (17) de l'évidement (16) de l'élément de retenue (13).

4. Unité d'actionnement de frein selon la revendication 3, **caractérisée en ce que** l'élément d'amortissement (19) est prévu sous forme de bague d'amortissement.

5. Unité d'actionnement de frein selon l'une quelconque des revendications précédentes, **caractérisée en ce que** l'élément de retenue (13) est fixé par soudage à la pédale de frein (4).

6. Unité d'actionnement de frein selon l'une quelconque des revendications précédentes, **caractérisée en ce que** le logement (15) en forme d'entonnoir présente une fente axiale (20) et une saillie radiale (21), la saillie (21) étant maintenue avec précontrainte de ressort dans une rainure intérieure (22) de la paroi intérieure de l'évidement.
